# EUROPÄISCHE PATENTSCHRIFT

(11) **EP 1 413 791 B1**
(45) Veröffentlichungstag und Bekanntmachung des Hinweises auf die Patenterteilung: **07.12.2005**
(21) Anmeldenummer: 02023564.4
(22) Anmeldetag: 23.10.2002
(51) Int. Cl.: F16D 69/00, F16D 13/64, F16D 25/12, F16D 25/0638

(54) **Reibbelagsegment, Reibbelag und Verfahren zu deren Herstellung**
Friction lining segment, friction lining and method of their manufacturing
Segment de garniture de friction, garniture de friction et procédé de leur fabrication

(43) Veröffentlichungstag der Anmeldung: 28.04.2004
(60) Teilanmeldung: 04009494.8
(73) Patentinhaber: BorgWarner Inc., Auburn Hills MI 48326 (US)
(72) Erfinder: Fabricius, Emilio, 67823 Oftersheim (DE); Otremba, Markus, 68723 Schwetzingen (DE); Lenk, Meike, 64579 Gernsheim (DE)
(74) Vertreter: Patentanwälte Westphal, Mussgnug & Partner

(56) Entgegenhaltungen:
- EP-A- 0 771 962
- EP-A- 0 848 177
- US-A- 4 260 047
- US-A- 5 713 450
- US-A- 6 013 696
- US-A1- 2002 043 441
- US-B1- 6 170 629

## Beschreibung

Die Erfindung betrifft ein Reibbelagsegment gemäß dem Oberbegriff des Patentanspruchs 1, einen Reibbelag gemäß dem Oberbegriff des Patentanspruchs 8 sowie ein Verfahren zur Herstellung von Reibbelagsegmenten gemäß dem Oberbegriff des Patentanspruchs 12. Ein Solches Reibbelagsegment ist z.B. aus DE 697 01 946 T2 bekannt.

Brems- oder Kupplungseinrichtungen, wie z.B. die in den Dokumenten DE 28 54 051 A1, US 4,280,609 oder DE 35 32 759 C1 beschriebenen Mehrscheibenlamellenkupplungen, von denen die Erfindung ausgeht und auf die nachfolgend Bezug genommen wird, basieren auf zwei oder mehr im allgemeinen als Lamellen bezeichneten Reibscheiben mit vorzugsweise im wesentlichen ringförmiger Gestalt. Eine erste Gruppe dieser Lamellen, die sogenannten Außenlamellen, sind auf einem mit einer ersten Welle, beispielsweise einer Antriebswelle, gekoppelten Außenlamellenträger und eine zweite Gruppe dieser Lamellen, die sogenannten Innenlamellen, sind auf einem mit einer zweiten Welle, beispielsweise einer Abtriebswelle, gekoppelten Innenlamellenträger angeordnet. Die Lamellen der beiden Gruppen greifen verzahnungsartig ein Lamellenpaket bildend ineinander, wobei jeweils eine Außenlamelle zu einer Innenlamelle benachbart angeordnet ist. Außenlamellen und Innenlamellen sind in axialer Richtung zueinander begrenzt verschiebbar und dabei paarweise mit deren aneinander grenzenden Stirnflächen in Reibeingriff, d.h. ein Drehmoment von der Antriebs- auf die Abtriebswelle übertragend, und außer Reibeingriff verbringbar.

Ein Teil dieser Lamellen besteht aus einem vorzugsweise metallischen Träger, welcher auf einer oder auf beiden im wesentlichen ringförmigen Stirnflächen einen üblicherweise aus einem Faserstoff oder dergleichen gefertigten Reibbelag trägt. Beispielhaft sei auf die detaillierten Beschreibungen in den vorgenannten Druckschriften hingewiesen.

Reibbeläge der vorgenannten Art wurden anfangs einstückig ausgeführt. Aus Gründen der Materialersparnis ist es inzwischen üblich geworden, diese Reibbeläge aus mehreren einzelnen Reibbelagsegmenten zusammenzusetzen.

Aus mehreren Reibbelagsegmenten bestehende Reibbeläge sind beispielsweise auch aus der EP 0 521 843 A1 bekannt. Jedes Reibbelagsegment eines derartigen segmentierten Reibbelages weist in der Regel an einem an ein Ende eines benachbarten Reibbelagsegments angrenzenden Ende eine Lasche auf, welche in eine entsprechende in das Ende des benachbarten Reibbelagsegments eingebrachte komplementäre Nut eingreift. Auf diese Weise wird eine -auch unter Betriebsdruckbeaufschlagung- im wesentlichen unverrückbare Verbindung zwischen benachbarten Reibbelagsegmenten hergestellt. Diese im wesentlichen unverrückbare Verbindung wird in der Fachsprache auch als Schloss bezeichnet.

Obwohl sich segmentierte Reibbeläge mit derartigen Verbindungen benachbarter Reibbelagsegmente dem Grunde nach bewährt haben, ist eine Beschädigung der Verbindungsstelle möglich, wohingegen bei nichtsegmentierten Reibbelägen eine derartige Beschädigung nicht auftreten kann. Die Beschädigung der Verbindungsstelle ist darauf zurückzuführen, dass es bei Lastbeaufschlagung zu Ausbrüchen an den Verbindungsstellen des Reibbelages kommt. Insbesondere an den jeweiligen Enden der Reibbelagsegmente lose abstehende Fasern des Reibmaterials führen leicht zu einem Ausbruch.

Zur Verminderung der vorschnellen Zerstörung der Reibbeläge wird in der DE 697 01 946 T2 (bzw. entsprechend der US 5,713,450) vorgeschlagen, dass die Außenkontur der Lasche nicht exakt die geometrische Gestalt der Innenkontur der Nut aufweist, sondern dass zwischen deren Berandungen ein Speicherraum zur Aufnahme von Kühlmittel und Streufasern gebildet wird. Dadurch wird eine Dissipation und Verteilung der Wärme bewirkt, die im (Regel-) Betrieb in der Mitte der Laschen- und Nutverbindungsstelle erzeugt wird.

Es hat sich gezeigt, dass diese Maßnahme zwar eine erhebliche Reduktion des Verschleißes zur Folge hatte, dass die Lebensdauern von unsegmentierten Belägen jedoch weiterhin unerreicht sind.

Der Erfindung liegt somit die Aufgabe zugrunde, die bekannten Reibbelagsegmente derart auszugestalten und weiterzubilden, dass der Verschleiß von segmentierten Reibbelägen im Schlossbereich weiter reduziert wird. Weiterhin soll ein Verfahren vorgestellt werden, mit dem sich derartige verbesserte Reibbelagsegmente bzw. entsprechende Reibbeläge herstellen lassen.

Diese Aufgabe wird bei einem Reibbelagsegment gattungsgemäßer Art durch die Merkmale des kennzeichnenden Teils des Anspruches 1 erfindungsgemäß gelöst. Ein erfindungsgemäßer Reibbelag ergibt sich aus einem gattungsgemäßen Reibbelag durch die Merkmale des kennzeichnenden Teils des Anspruchs 8. Ein erfindungsgemäßes Verfahren bedient sich der Merkmale des Patentanspruchs 12.

Vorteilhafte Ausführungen und Weiterbildungen der Erfindung sind in den Unteransprüchen angegeben.

Die Erfindung geht ganz allgemein von einem Reibbelagsegment für einen segmentierten Reibbelag einer Reibscheibe für eine Bremse, eine Kupplung oder dergleichen aus, welches zumindest einendseitig ein Schlosselement aufweist, welches mit einem im wesentlichen geometrisch komplementär ausgebildeten Schlossgegenelement eines weiteren Reibbelagsegments entsprechend der vorstehend beschriebenen Weise verbindbar ist.

Andernendseitig wird das Reibbelagsegment, von dem die Erfindung ausgeht, im allgemeinen ein zu dem Schlosselement geometrisch komplementär ausgebildetes Schlossgegenelement aufweisen, so dass ein üblicherweise ringförmiger Reibbelag aus einer Mehrzahl derartiger dieselbe geometrische Gestalt aufweisender und üblicherweise ringsegmentförmig ausgebildeter Reibbelagsegmente zusammengesetzt werden kann. Benachbarte Reibbelagsegmente werden dabei mit Hilfe dieser Schlosselemente und Schlossgegenelemente sogenannte Schlösser bildend zusammengehalten.

Die Erfindung betrifft nicht nur die vorstehend beschriebene idealtypische Ausführung von Reibbelagsegmenten mit Schlosselement und komplementärem Schlossgegenelement, sondern sie schließt auch solche Reibbelagsegmente ein, die einendseitig ein Schlosselement aufweisen und andernendseitig ein anders geformtes (nicht zu dem Schlosselement komplementäres) Schlossgegenelement aufweisen.

Erfindungsgemäß ist vorgesehen, dass in einem Bereich des Schlosselements und/oder in einem Bereich des Schlossgegenelements ein Loch oder mehrere Löcher in die Reibbelagsegmente eingebracht sind. Die maximale Betriebsdauer von Kupplungs- oder Bremseinrichtungen mit Reibscheiben mit auf derartigen Reibbelagsegmenten basierenden segmentierten Reibbelägen konnte durch diese Maßnahme signifikant erhöht werden. Dies ist darauf zurückzuführen, dass diese Löcher an den jeweiligen aneinandergrenzenden Kanten benachbarter Reibbelagsegmente bei Lastbeaufschlagung ein Entspannen des Belags ermöglichen. Die Lebensdauer eines derartigen segmentierten Belags ist damit nahezu identisch mit der eines unsegmentierten Belags.

Eine besonders vorteilhafte Ausführungsvariante der Erfindung besteht darin, dass das Schlosselement und/oder das Schlossgegenelement eine Lasche aufweist, in welcher das wenigstens eine Loch vorgesehen ist. Diese Variante lehnt sich an an sich bekannte Ausführungsformen von Reibbelagsegmenten an.

Bei Reibbelagsegmenten, bei denen die Lasche einen Hals und einen Kopf aufweist ist erfindungsgemäß vorgesehen, dass sich ein Loch in dem Kopf befindet. Vorteilhafterweise weist dabei das Loch eine geometrische Gestalt auf, welche im wesentlichen der Außenkontur des Kopfes entspricht.

Es hat sich als besonders vorteilhaft herausgestellt, den Kopf im wesentlichen rautenförmig (Krokodil) auszubilden. Hier ist es ausreichend, wenn die geometrische Gestalt des Loches insoweit an die Rautenform angenähert ist, dass dessen Außenkontur die Form einer Ellipse aufweist.

Erfindungsgemäß ist ferner vorgesehen, dass das Schlosselement und/oder das Schlossgegenelement eine Nut aufweist und dass wenigstens ein Loch in dem an die Nut angrenzenden Bereich vorgesehen ist.

Die besten Ergebnisse im Hinblick auf die Verschleißeigenschaften wurden dann erreicht, wenn sich die Tiefe der in den Belag eingebrachten Löcher über die gesamte Dicke des Reibbelags erstreckte. Unter gewissen Umständen (z.B. aus Stabilitätsgründen) kann es jedoch zweckmäßig sein, die Löcher als Sacklöcher auszuführen.

Die Löcher werden erfindungsgemäß durch Fräsen, Stanzen oder Schneiden in die Reibbelagsegmente der vorstehend beschriebenen Art eingebracht.

Zusätzlich ist erfindungsgemäß vorgesehen, dass die Schlosselemente bzw. die Schlossgegenelemente an den Reibbelagsegmentenden im wesentlichen senkrecht zu der Richtung der Fasern des Belags gestanzt oder geschnitten werden.

Diverse Ausführungsbeispiele der Erfindung sind in den Zeichnungen dargestellt und werden im folgenden näher beschrieben. Es zeigen:
- Figur 1 -: Eine Draufsicht auf ein erstes Ausführungsbeispiel einer Reibscheibe mit erfindungsgemäß ausgestaltetem segmentiertem Reibbelag;
- Figur 2 -: eine Draufsicht auf ein Fragment eines zweiten Ausführungsbeispiels eines erfindungsgemäß ausgestalteten segmentierten Reibbelags;
- Figur 3 -: eine Draufsicht auf ein Fragment eines dritten Ausführungsbeispiels eines erfindungsgemäß ausgestalteten segmentierten Reibbelags;
- Figur 4 a): einen Umfangsquerschnitt eines Fragments eines vierten Ausführungsbeispiels eines erfindungsgemäß ausgestalteten segmentierten Reibbelags;

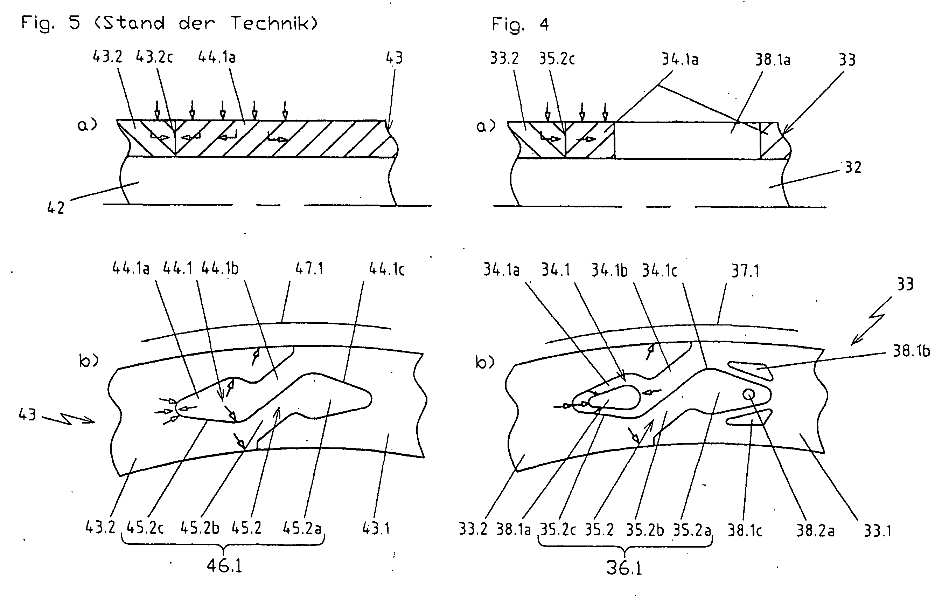

- Figur 4 b): eine Draufsicht auf ein Fragment des in der Figur 4a) dargestellten vierten Ausführungsbeispiels eines erfindungsgemäß ausgestalteten segmentierten Reibbelags;
- Figur 5 a): einen Umfangsquerschnitt eines Fragments eines segmentierten Reibbelags gemäß dem Stand der Technik, bei dem die geometrische Gestalt des Schlosses der Reibbelagsegmente identisch wie die des Schlosses des in den Figuren 4a) und 4b) dargestellten vierten erfindungsgemäß ausgestalteten Ausführungsbeispiels gewählt ist;
- Figur 5 b): eine Draufsicht auf ein Fragment des in der Figur 5a) dargestellten segmentierten Reibbelags gemäß dem Stand der Technik;

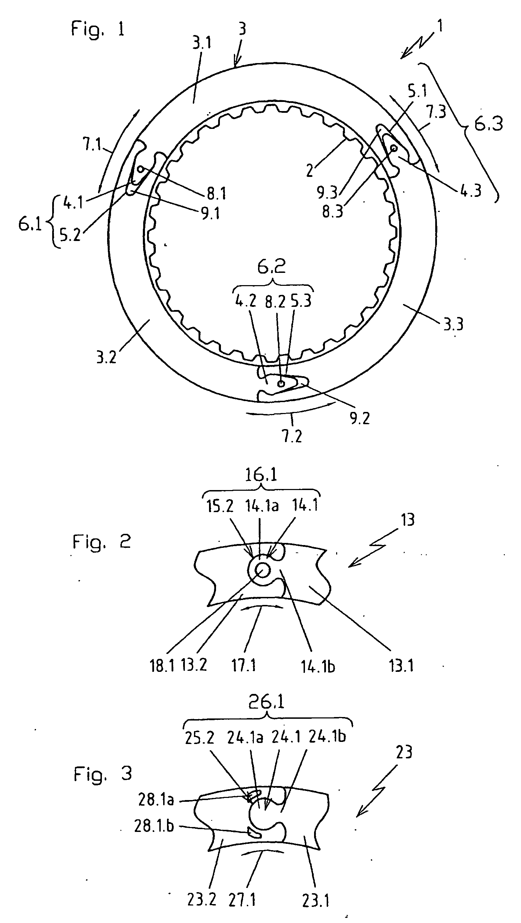

Die Figur 1 zeigt eine Reibscheibe oder Lamelle 1 mit erfindungsgemäß verbessertem segmentiertem Reibbelag 3. Die Lamelle 1 weist eine im wesentlichen ringförmige Gestalt auf.

Sie umfasst einen im wesentlichen ringförmigen metallischen Träger 2 mit einer Innenverzahnung (alternativ ist selbstverständlich auch eine Außenverzahnung möglich), dessen dem Betrachter zugewandte Stirnfläche großflächig mit einem ringförmigen Reibbelag 3 versehen ist.

Der ringförmige Reibbelag 3 auf der Stirnfläche des Trägers 2 besteht aus drei (alternativ ist jede beliebige ungerade Anzahl möglich) einzelnen Reibbelagsegmenten 3.1, 3.2 und 3.3. Alle drei Reibbelagsegmente 3.1, 3.2 und 3.3 bilden Ringsegmente mit übereinstimmender geometrischer Gestalt. Jeweils zwei Reibbelagsegmente 3.1 und 3.2 bzw. 3.2 und 3.3 bzw. 3.3 und 3.1 grenzen endseitig aneinander und bilden dabei einen im wesentlichen geschlossenen Ring.

Die jeweiligen aneinandergrenzenden Enden benachbarter Reibbelagsegmente 3.1 und 3.2 bzw. 3.2 und 3.3 bzw. 3.3 und 3.1 sind derart komplementär zueinander ausgeführt, dass sie jeweils feste Verbindungen zwischen den benachbarten Reibbelagsegmenten 3.1 und 3.2 bzw. 3.2 und 3.3 bzw. 3.3 und 3.1 bilden, welche in der Fachsprache als Schlösser 6.1, 6.2 und 6.3 bezeichnet werden.

Nachfolgend wird jeweils ein Ende eines Reibbelagsegments 3.1, 3.2 oder 3.3 als Schlosselement und das andere in der Regel komplementär zu dem Schlosselement ausgebildete Ende des Reibbelagsegments 3.1, 3.2 oder 3.3 als Schlossgegenelement bezeichnet.

Vorliegend weisen die jeweiligen Schlosselemente die Gestalt einer Lasche 4.1, 4.2, 4.3 auf. Entsprechend weisen die jeweiligen Schlossgegenelemente die Form einer Nut 5.1, 5.2, 5.3 auf. Die jeweiligen Laschen 4.1, 4.2, 4.3 und Nuten 5.2, 5.3, 5.1 bilden demzufolge jeweils ein Schloss 6.1, 6.2, 6.3.

Bei dem in der Figur 1 dargestellten Ausführungsbeispiel sind die jeweiligen Laschen 4.1, 4.2 und 4.3 länglich ausgebildet. Sie weisen jeweils einen Kopfabschnitt und einen schmaleren Halsabschnitt auf. Die jeweiligen Nuten 5.1, 5.2 und 5.3 sind in ihrer geometrischen Form so gewählt, dass sie die Laschen 4.1, 4.2 und 4.3 aufnehmen können. Die jeweiligen Nuten 5.1, 5.2 und 5.3 erstrecken sich jedoch weiter in Umfangsrichtung, so dass an den jeweiligen Enden der Kopfabschnitte der Laschen 4.1, 4.2 und 4.3 Hohlräume gebildet sind, welche entsprechend der DE 697 01 946 T2 als Speicherräume 9.1, 9.2, 9.3 bezeichnet werden.

Neben diesen Speicherräumen 9.1, 9.2, 9.3 sind erfindungsgemäß in den jeweiligen Schlossbereichen 7.1, 7.2 und 7.3 weitere Hohlräume bildende Öffnungen 8.1, 8.2 und 8.3 vorgesehen. Diese Öffnungen 8.1, 8.2, 8.3 oder Löcher sind vorliegend in die Kopfabschnitte der jeweiligen Laschen 4.1, 4.2, 4.3 eingebracht. Dadurch wird die Elastizität des jeweiligen Schlosses 6.1, 6.2, 6.3 erhöht.
Die Figur 2 zeigt ein Fragment eines zweiten Ausführungsbeispiels eines erfindungsgemäß ausgestalteten segmentierten Reibbelags 13.

Es sei angenommen, dass der Reibbelag 13 entsprechend dem vorstehend beschriebenen Ausführungsbeispiel Bestandteil einer Lamelle mit im wesentlichen ringförmiger Gestalt ist, welche einen im wesentlichen ringförmigen metallischen Träger mit einer Außen- oder einer Innenverzahnung umfasst, von dem wenigstens eine Stirnfläche entsprechend der vorstehend vorgestellten Variante großflächig mit dem ringförmigen Reibbelag 13 versehen ist.

Der ringförmige Reibbelag 13 auf der Stirnfläche des Trägers besteht aus mehreren einzelnen Reibbelagsegmenten 13.1, 13.2, von denen zwei fragmentarisch in der Zeichnungsfigur abgebildet sind. Die Reibbelagsegmente 13.1, 13.2 bilden entsprechend der vorstehend beschriebenen Ausführungsvariante gemäß der Figur 1 Ringsegmente mit übereinstimmender geometrischer Gestalt. Jeweils zwei Reibbelagsegmente 13.1 und 13.2 grenzen - wie hier skizziert- endseitig aneinander und bilden dabei einen im wesentlichen geschlossenen Ring.

Auch hier sind die jeweiligen aneinandergrenzenden Enden der benachbarten Reibbelagsegmente 13.1 und 13.2 komplementär zueinander, Schlosselemente bzw. Schlossgegenelemente bildend ausgeführt.

Ähnlich wie beim ersten Ausführungsbeispiel gemäß der Figur 1 weisen auch hier die jeweiligen Schlosselemente die Gestalt einer Lasche 14.1 auf. Entsprechend weisen die jeweiligen Schlossgegenelemente die Form einer Nut 15.2 auf. Die in der Zeichnung gemäß der Figur 2 exemplarisch dargestellte Lasche 14.1 und die diese umgreifende Nut 15.2 bilden ein Schloss 16.1.

Bei dem dargestellten Ausführungsbeispiel weist die Lasche 14.1 einen Kopfabschnitt und einen schmaleren Halsabschnitt auf. Der im wesentlichen kreisrunde Kopf und der diesen mit dem übrigen Reibbelagsegment 13.1 verbindende Hals sind in der Zeichnungsfigur mit Hilfe der Bezugszeichen 14.1a bzw. 14.1b gekennzeichnet.

Im hier abgebildeten Schlossbereich 17.1 ist erfindungsgemäß ein Hohlraum vorgesehen. Dieser kreisrunde Hohlraum, hier und im weiteren als Loch bezeichnet, ist in der Zeichnungsfigur 2 durch das Bezugszeichen 18.1 gekennzeichnet. Dieses Loch 18.1 durchsetzt den Kopf 14.1a zentral.

Die Figur 3 zeigt ein Fragment eines weiteren dritten Ausführungsbeispiels eines erfindungsgemäß ausgestalteten segmentierten Reibbelags 23.

Dieser Reibbelag 23 ist entsprechend dem vorstehend beschriebenen zweiten Ausführungsbeispiel Bestandteil einer Lamelle und auch im übrigen im wesentlichen identisch ausgeführt.

Exemplarisch zeigt auch das Fragment gemäß der Figur 3 den Schlossbereich 27.1 zweier aneinandergrenzender Reibbelagsegmente 23.1 und 23.2.

Das Schlosselement des ersten Reibbelagsegments 23.1 ist entsprechend dem vorstehend beschriebenen Ausführungsbeispiel ausgestaltet, nämlich in der Form einer Lasche 24.1 mit einem kreisförmigen Kopf 24.1a und einem diesen mit dem Ende des Reibbelagsegments 23.1 verbindenden Hals 24.1b.

Das Schlossgegenelement des endseitig an das erste Reibbelagsegment 23.1 angrenzenden zweiten Reibbelagsegments 23.2 ist entsprechend komplementär in der Form einer Nut 25.2 ausgeführt, welche in der Figur 3 die Lasche 24.1 ein Schloss 26.1 bildend formschlüssig umfängt.

Die Ausführungsbeispiele gemäß den Figuren 2 und 3 unterscheiden sich lediglich dadurch, dass bei ersterer der Kopf 14.1a der Lasche 14.1 des ersten Reibbelagsegments 23.1 ein Loch 18.1 aufweist, während bei letzterem in das Schlossgegenelement des zweiten Reibbelagsegments 23.2 in Kopfnähe zwei Löcher 28.1a und 28.1b eingebracht oder eingeformt sind. Beide Ausführungen sind geeignet, die Elastizität des Belags im Schlossbereich 17.1 bzw. 27.1 derart zu erhöhen, dass die mechanische Beanspruchung des Belags unter Last in diesem Bereich signifikant reduziert wird, mit der Folge, dass die Lebensdauer der segmentierten Beläge nahezu der nichtsegmentierter Beläge entspricht.

Die Figur 4 zeigt ein Fragment eines weiteren vierten, bevorzugten Ausführungsbeispiel einer Reibscheibe mit erfindungsgemäß ausgestaltetem segmentiertem Reibbelag 33. Die Figur 5 zeigt in Gegenüberstellung ein Fragment einer Reibscheibe gemäß dem Stand der Technik, welche -bis auf die erfindungsgemäße Ausgestaltung- identisch wie die in der Figur 4 dargestellte Reibscheibe ausgeführt ist.

Die beiden hier nur fragmentarisch dargestellten Reibscheiben weisen jeweils eine im wesentlichen ringförmige Gestalt auf.

Sie umfassen einen im wesentlichen ringförmigen metallischen Träger 32, 42 und einen ebenfalls ringförmigen Reibbelag 33, 43, welcher jeweils auf eine Stirnseite der Träger 32, 42 vorzugsweise durch Verleimen aufgebracht ist.

Die ringförmigen Reibbeläge 33, 43 bestehen aus einer Mehrzahl von Reibbelagsegmenten, von denen exemplarisch jeweils zwei fragmentarisch in den Figuren 4a) und b) sowie 5a) und b) dargestellt sind. Die dargestellten Reibbelagsegmente tragen die Bezugszeichen 33.1, 33.2 sowie 43.1, 43.2.

Alle (auch die hier nicht gezeichneten) Reibbelagsegmente 33.1, 33.2 bzw. 43.1, 43.2 bilden Ringsegmente mit übereinstimmender geometrischer Gestalt. Jeweils zwei Reibbelagsegmente 33.1 und 33.2 bzw. 43.1 und 43.2 grenzen endseitig aneinander und bilden dabei einen im wesentlichen geschlossenen Ring.

Die jeweiligen aneinandergrenzenden Enden der benachbarten Reibbelagsegmente 33.1 und 33.2 bzw. 43.1 und 43.2 sind derart komplementär zueinander ausgeführt, dass sie jeweils feste Verbindungen (Schlösser) 36.1, 46.1 zwischen den benachbarten Reibbelagsegmenten 33.1 und 33.2 bzw. 43.1 und 43.2 bilden.

Vorliegend umfassen die jeweiligen Schlosselemente 34.1, 44.1 ebenso wie die komplementär ausgebildeten Schlossgegenelemente 35.2, 45.2 eine Lasche mit einem von einem Hals 34.1b, 35.2b, 44.1b, 45.2b getragenen Kopf 34.1a, 35.2a, 44.1a, 45.2a sowie eine an diese Lasche angrenzende Nut 34.1c, 35.2c, 44.1c, 45.2c.

Bei dem in der Figur 4 gezeigten Ausführungsbeispiel sind erfindungsgemäß im Schlossbereich 37.1 mehrere Entspannungs-Löcher/Öffnungen vorgesehen. So weist der rautenförmige Kopf 34.1a des ersten Schlosselements 34.1 eine im wesentlichen die Kontur des Kopfes 34.1a nachzeichnende Öffnung 38.1a. Weiterhin befindet sich auch in dem Kopf 35.2a des Schlossgegenelements 35.2 ein kreisrundes Loch 38.2a. Schließlich sind in das Schlosselement 34.1 in dem an die Nut 34.1c angrenzenden Schlosselementbereich zwei dreieckige Löcher 38.1b und 38.1c eingebracht, welche den rautenförmigen Kopf 35.2a des Schlossgegenelements 35.2 im wesentlichen achssymmetrisch umgeben. Diese Löcher sind vorzugsweise in den Reibbelag eingestanzt.

Den Figuren 4 und 5 ist ferner mit Hilfe von Pfeilen angedeutet, wie senkrecht auf die Oberfläche der jeweiligen Reibbeläge 33, 43 wirkende Kräfte die jeweiligen Reibbeläge 33, 43 in deren Reibbelagsebene deformieren.

Ganz allgemein wird ein deformierbarer Körper bei Einwirkung von Kompressionskräften auf einen Teil dessen Oberfläche in Richtung seiner freien, keinen Kräften ausgesetzten Oberflächen ausweichen. Nicht anders verhält es sich bei einem Reibbelagsegment der vorstehend beschriebenen Art.

Bei Reibbelagsegmenten 43.1, 43.2 gemäß dem Stand der Technik (Figur 5a) und b)) findet demzufolge eine Ausdehnung in der Reibbelagsebene statt. Die Außenberandungen aneinander angrenzender Schlosselemente 44.1 und Schlossgegenelemente 45.2 benachbarter Reibbelagsegmente 43.1, 43.2 werden dabei gegeneinander gedrückt, was schließlich zu einer Aufwölbung im Bereich der Außenberandungen und damit zu einer den Verschleiß unterstützenden mechanischen Belastung.

Anders verhält es sich bei Reibbelagsegmenten 33.1, 33.2 gemäß der Erfindung (Figur 4a) und b)). Zwar findet auch hier unter Kompression eine Ausdehnung in der Ebene des Reibbelags 33 selbst statt. Hier kann der Belag 33 jedoch in Richtung der speziell eingebrachten Löcher 38.1a, 38.1b, 38.1c, 38.2a ausweichen. Der horizontal (in der Belagsebene) wirkende Gegendruck im Bereich der aneinandergrenzenden Außenberandungen der Schlosselemente 34.1 und Schlossgegenelemente 35.2 wird dabei deutlich abgebaut. Ein Aufwölben in diesem Bereich ist bei geeigneter Anordnung und Ausdehnung der Löcher 38.1a, 38.1b, 38.1c, 38.2a weitgehend ausgeschlossen.

### Bezugszeichenliste

- 1: Lamelle
- 2: Träger
- 3: Reibbelag
- 3.1: erstes Reibbelagsegment
- 3.2: zweites Reibbelagsegment
- 3.3: drittes Reibbelagsegment
- 4.1: Lasche des ersten Reibbelagsegments
- 4.2: Lasche des zweiten Reibbelagsegments
- 4.3: Lasche des dritten Reibbelagsegments
- 5.1: Nut des ersten Reibbelagsegments
- 5.2: Nut des zweiten Reibbelagsegments
- 5.3: Nut des dritten Reibbelagsegments
- 6.1: erstes Schloss
- 6.2: zweites Schloss
- 6.3: drittes Schloss
- 7.1: erster Schlossbereich
- 7.2: zweiter Schlossbereich
- 7.3: dritter Schlossbereich
- 8.1: erste Öffnung
- 8.2: zweite Öffnung
- 8.3: dritte Öffnung
- 9.1: erster Speicherraum
- 9.2: zweiter Speicherraum
- 9.3: dritter Speicherraum

- 13: Reibbelag
- 13.1: erstes Reibbelagsegment
- 13.2: zweites Reibbelagsegment
- 14.1: Lasche des ersten Reibbelagsegments
- 14.1a: Kopf der ersten Lasche
- 14.1b: Hals der ersten Lasche
- 15.2: Nut des zweiten Reibbelagsegments

- 16.1: erstes Schloss
- 17.1: erster Schlossbereich
- 18.1: erste Öffnung

- 23: Reibbelag
- 23.1: erstes Reibbelagsegment
- 23.2: zweites Reibbelagsegment
- 24.1: Lasche des ersten Reibbelagsegments
- 24.1a: Kopf der ersten Lasche
- 24.1b: Hals der ersten Lasche
- 25.2: Nut des zweiten Reibbelagsegments
- 26.1: erstes Schloss
- 27.1: erster Schlossbereich
- 28.1a: erste Öffnung
- 28.1b: zweite Öffnung

- 32: Träger
- 33: Reibbelag
- 33.1: erstes Reibbelagsegment
- 33.2: zweites Reibbelagsegment
- 34.1: Schlosselement des ersten Reibbelagsegments
- 34.1a: Kopf des ersten Schlosselements
- 34.1b: Hals des ersten Schlosselements
- 34.1c: Nut des ersten Schlosselements
- 35.2: Schlossgegenelement des zweiten Reibbelagsegments
- 35.2a: Kopf des zweiten Schlossgegenelements
- 35.2b: Hals des zweiten Schlossgegenelements
- 35.2c: Nut des zweiten Schlossgegenelements
- 36.1: erstes Schloss
- 37.1: erster Schlossbereich
- 38.1a: erste Öffnung
- 38.1b: zweite Öffnung
- 38.1c: dritte Öffnung
- 38.2a: vierte Öffnung

- 42: Träger
- 43: Reibbelag
- 43.1: erstes Reibbelagsegment
- 43.2: zweites Reibbelagsegment
- 44.1: Schlosselement des ersten Reibbelagsegments
- 44.1a: Kopf des ersten Schlosselements
- 44.1b: Hals des ersten Schlosselements
- 44.1c: Nut des ersten Schlosselements
- 45.2: Schlossgegenelement des zweiten Reibbelagsegments
- 45.2a: Kopf des zweiten Schlossgegenelements
- 45.2b: Hals des zweiten Schlossgegenelements
- 45.2c: Nut des zweiten Schlossgegenelements
- 46.1: erstes Schloss
- 47.1: erster Schlossbereich

## Patentansprüche

1. Reibbelagsegment (3.1, 3.2, 3.3; 13.1, 13.2; 23.1, 23.2; 33.1, 33.2) für einen segmentierten Reibbelag (3, 13, 23, 33) einer Reibscheibe (1) für eine Bremse, eine Kupplung oder dergleichen
- mit einem einendseitig angeordneten Schlosselement (4.1, 4.2, 4.3; 14.1; 24.1; 34.1) und/oder
- mit einem andernendseitig angeordneten Schlossgegenelement (5.1, 5.2, 5.3; 15.2; 25.2; 35.2)
**dadurch gekennzeichnet, dass**
- in einem Bereich (7.1, 7.2, 7.3; 17.1; 27.1; 37.1) des Schlosselements (4.1, 4.2, 4.3; 14.1; 24.1; 34.1) und/oder
- in einem Bereich (7.1, 7.2, 7.3; 17.1; 27.1; 37.1) des Schlossgegenelements (5.1, 5.2, 5.3; 15.2; 25.2; 35.2) wenigstens ein Loch (8.1, 8.2, 8.3; 18.1; 28.1a, 28.1b; 38.1a, 38.1b, 38.1c, 38.2a) vorgesehen ist, welches an den jeweiligen aneinandergrenzenden Kanten benachbarter Reibbelagsegmente (3.1, 3.2, 3.3; 13.1, 13.2; 23.1, 23.2; 33.1; 33.2) bei Lastbeaufschlagung ein Entspannen des Reibbelags (3, 13, 23, 33) ermöglicht.

2. Reibbelagsegment nach Anspruch 1,
**dadurch gekennzeichnet, dass**
das Schlosselement (34.1) und/oder das Schlossgegenelement (35.2) eine Lasche (4.1, 4.2, 4.3; 14.1; 24.1; 34.1a, 34.1b, 35.2a, 35.2b) aufweist, in welcher das wenigstens eine Loch (8.1, 8.2, 8.3; 18.1; 38.1a, 38.2a) vorgesehen ist.

3. Reibbelagsegment nach Anspruch 2,
**dadurch gekennzeichnet, dass**
die Lasche (4.1, 4.2, 4.3; 14.1; 24.1; 34.1a, 34.1b, 35.2a, 35.2b) einen Hals (14.1b; 24.1b; 34.1b, 35.2b) und einen Kopf (14.1a, 24.1a; 34.1a, 35.2a) aufweist und dass sich das wenigstens eine Loch (8.1, 8.2, 8.3; 18.1; 38.1a, 38.2a) in dem Kopf (14.1a, 24.1a; 34.1a, 35.2a) befindet.

4. Reibbelagsegment nach Anspruch 3,
**dadurch gekennzeichnet, dass**
das wenigstens eine Loch (8.1, 8.2, 8.3; 18.1; 38.1a, 38.2a) eine Außenkontur aufweist, welche im wesentlichen der Außenkontur des Kopfes (14.1a, 24.1a; 34.1a, 35.2a) entspricht.

5. Reibbelagsegment nach Anspruch 4,
**dadurch gekennzeichnet, dass**
der Kopf (34.1a, 35.2a) rautenförmig ausgebildet ist und dass das wenigstens eine Loch (38.1a) eine ellipsenförmige Außenkontur aufweist.

6. Reibbelagsegment nach einem der vorangegangenen Ansprüche,
**dadurch gekennzeichnet, dass**
das Schlosselement (34.1) und/oder das Schlossgegenelement (35.2) eine Nut (5.1, 5.2, 5.3; 15.2; 25.2; 34.1c, 35.2c) aufweist und dass das wenigstens eine Loch (28.1a, 28.1b; 38.1b, 38.1c) in dem an die Nut (5.1, 5.2, 5.3; 15.2; 25.2; 34.1c, 35.2c) angrenzenden Bereich (7.1, 7.2, 7.3; 17.1; 27.1; 37.1) vorgesehen ist.

7. Reibbelagsegment nach einem der vorangegangenen Ansprüche,
**dadurch gekennzeichnet, dass**
sich die Tiefe des wenigstens einen Lochs (8.1, 8.2, 8.3; 18.1; 28.1a, 28.1b; 38.1a, 38.1b, 38.1c, 38.2a) über die gesamte Dicke des Reibbelags (3, 13, 23, 33) erstreckt.

8. Reibbelag (3, 13, 23, 33) einer Reibscheibe für eine Bremse, eine Kupplung oder dergleichen
- mit wenigstens zwei wenigstens einendseitig aneinandergrenzenden Reibbelagsegmenten (3.1, 3.2, 3.3; 13.1, 13.2; 23.1, 23.2; 33.1, 33.2), wobei
- das erste Reibbelagsegment (3.1, 3.2, 3.3; 13.1, 13.2; 23.1, 23.2; 33.1, 33.2) an einem an ein Ende des benachbarten zweiten Reibbelagsegments (3.1, 3.2, 3.3; 13.1, 13.2; 23.1, 23.2; 33.1, 33.2) angrenzenden Ende ein Schlosselement (4.1, 4.2, 4.3; 14.1; 24.1; 34.1) und/oder ein Schlossgegenelement (5.1, 5.2, 5.3; 15.2; 25.2; 35.2) aufweist, welches
- mit einem an dem angrenzenden Ende des benachbarten zweiten Reibbelagsegments (3.1, 3.2, 3.3; 13.1, 13.2; 23.1, 23.2; 33.1, 33.2) angeordneten Schlossgegenelement (5.1, 5.2, 5.3; 15.2; 25.2; 35.2) bzw. Schlosselement (4.1, 4.2, 4.3; 14.1; 24.1; 34.1) ein Schloss (6.1, 6.2, 6.3; 16.1; 26.1; 36.1) bildend verbindbar ist,
**dadurch gekennzeichnet, dass**
- in einem Bereich (7.1, 7.2, 7.3; 17.1; 27.1; 37.1) des Schlosses (6.1, 6.2, 6.3; 16.1; 26.1; 36.1) wenigstens ein Loch (8.1, 8.2, 8.3; 18.1; 28.1a, 28.1b; 38.1a, 38.1b, 38.1c, 38.2a) vorgesehen ist, welches an den jeweiligen aneinandergrenzenden Kanten benachbarter Reibbelagsegmente (3.1, 3.2, 3.3; 13.1, 13.2; 23.1, 23.2; 33.1; 33.2) bei Lastbeaufschlagung ein Entspannen des Reibbelags (3, 13, 23, 33) ermöglicht.

9. Reibbelag nach Anspruch 8,
**dadurch gekennzeichnet, dass**
- das Schlosselement (34.1) eine Lasche (4.1, 4.2, 4.3; 14.1; 24.1; 34.1a, 34.1b) mit einem Hals (14.1b, 24.1b, 34.1b) und einem Kopf (14.1a, 24.1a, 34.1a) aufweist und dass
- das Schlossgegenelement (35.2) eine Nut (5.1, 5.2, 5.3; 15.2; 25.2; 34.1c, 35.2c) aufweist, welche die Lasche (4.1, 4.2, 4.3; 14.1; 24.1; 34.1a, 34.1b) mit dem Hals (14.1b, 24.1b, 34.1b) und dem Kopf (14.1a, 24.1a, 34.1a) im wesentlichen formschlüssig aufnimmt und dass
- der Kopf (14.1a, 24.1a, 34.1a) das wenigstens eine Loch (8.1, 8.2, 8.3; 18.1; 38.1a) aufweist.

10. Reibbelag nach Anspruch 9,
**dadurch gekennzeichnet, dass**
in dem an die Nut (5.1, 5.2, 5.3; 15.2; 25.2; 34.1c, 35.2c) angrenzenden Bereich des Schlossgegenelements (35.2) wenigstens ein weiteres Loch (28.1a, 28.1b; 38.1b, 38.1c) vorgesehen ist.

11. Reibbelag nach Anspruch 9 oder 10,
**dadurch gekennzeichnet , dass**
- das Schlossgegenelement (35.2) eine Lasche mit einem Hals (35.2b) und einem Kopf (35.2a) aufweist und dass
- das Schlosselement (34.1) eine Nut (34.1c) aufweist, welche die Lasche mit dem Hals (35.2b) und dem Kopf (35.2a) im wesentlichen formschlüssig aufnimmt und dass
- der Kopf (35.2a) wenigstens ein weiteres Loch (38.2a) aufweist.

12. Verfahren zur Herstellung von Reibbelagsegmenten (3.1, 3.2, 3.3; 13.1, 13.2; 23.1, 23.2; 33.1, 33.2), welche
- wenigstens ein einendseitig angeordnetes Schlosselement (4.1, 4.2, 4.3; 14.1; 24.1; 34.1) und/oder
- wenigstens ein andernendseitig angeordnetes Schlossgegenelement (5.1, 5.2, 5.3; 15.2; 25.2; 35.2) aufweisen und
- welche aus einem Fasermaterial gestanzt oder geschnitten werden
**dadurch gekennzeichnet, dass**
- in einen Bereich (7.1, 7.2, 7.3; 17.1; 27.1; 37.1) des Schlosselements (4.1, 4.2, 4.3; 14.1; 24.1; 34.1) und/oder
- in einen Bereich (7.1, 7.2, 7.3; 17.1; 27.1; 37.1) des Schlossgegenelements (5.1, 5.2, 5.3; 15.2; 25.2; 35.2) wenigstens ein Loch (8.1, 8.2, 8.3; 18.1; 28.1a, 28.1b; 38.1a, 38.1b, 38.1c, 38.2a) gefräst, gestanzt oder geschnitten wird, welches an den jeweiligen aneinandergrenzenden Kanten benachbarter Reibbelagsegmente (3.1, 3.2, 3.3; 13.1, 13.2; 23.1, 23.2; 33.1; 33.2) bei Lastbeaufschlagung ein Entspannen des Reibbelags (3, 13, 23, 33) ermöglicht.

13. Verfahren nach Anspruch 12,
**dadurch gekennzeichnet, dass**
die Schlosselemente (4.1, 4.2, 4.3; 14.1; 24.1; 34.1) bzw. die Schlossgegenelemente (5.1, 5.2, 5.3; 15.2; 25.2; 35.2) an den Reibbelagsegmentenden im wesentlichen senkrecht zu einer Faserrichtung gestanzt oder geschnitten werden.

14. Reibscheibe (1)
- mit einem Träger (2, 32) und
- mit wenigstens einem auf wenigstens einer Stirnseite des Trägers (2, 32) angeordneten Reibbelag (3, 13, 23, 33) gemäß einem der Ansprüche 8 bis 11.

15. Verfahren zur Herstellung einer Reibscheibe (1) nach Anspruch 14,
bei dem die Reibbelagsegmente (3.1, 3.2, 3.3; 13.1, 13.2; 23.1, 23.2; 33.1, 33.2) des Reibbelags (3, 13, 23, 33) mit dem Träger (2, 32) verleimt werden
**dadurch gekennzeichnet, dass**
die Reibscheibe (1) nach dem Verleimen in Harz getränkt wird.

## Claims

1. Friction-lining segment (3.1, 3.2, 3.3; 13.1, 13.2; 23.1, 23.2; 33.1, 33.2) for a segmented friction lining (3, 13, 23, 33) of a friction plate (1) for a brake, clutch or the like
- with a lock element (4.1, 4.2, 4.3; 14.1; 24.1; 34.1) arranged at one end and/or
- with a lock counter-element (5.1, 5.2, 5.3; 15.2; 25.2; 35.2) arranged at the other end,
**characterised in that**
- at least one hole (8.1, 8.2, 8.3; 18.1; 28.1a, 28.1b; 38.1a, 38.1b, 38.1c, 38.2a) is provided in a region (7.1, 7.2, 7.3; 17.1; 27.1; 37.1) of the lock element (4.1, 4.2, 4.3; 14.1; 24.1; 34.1) and/or
- in a region (7.1, 7.2, 7.3; 17.1; 27.1; 37.1) of the lock counter-element (5.1, 5.2, 5.3; 15.2; 25.2; 35.2), which hole allows the stress on the friction lining (3, 13, 23, 33) to be relieved at the respective adjoining edges of adjacent friction-lining segments (3.1, 3.2, 3.3; 13.1, 13.2; 23.1, 23.2; 33.1, 33.2) when subjected to load.

2. Friction-lining segment according to Claim 1, **characterised in that** the lock element (34.1) and/or the lock counter-element (35.2) have/has a tongue (4.1, 4.2, 4.3; 14.1; 24.1; 34.1a, 34.1b, 35.2a, 35.2b) in which the at least one hole (8.1, 8.2, 8.3; 18.1; 38.1a, 38.2a) is provided.

3. Friction-lining segment according to Claim 2, **characterised in that** the tongue (4.1, 4.2, 4.3; 14.1; 24.1; 34.1a, 34.1b, 35.2a, 35.2b) has a neck (14.1b; 24.1b; 34.1b, 35.2b) and a head (14.1a, 24.1a; 34.1a, 35.2a) and **in that** the at least one hole (8.1, 8.2, 8.3; 18.1; 38.1a, 38.2a) is located in the head (14.1a, 24.1a; 34.1a, 35.2a).

4. Friction-lining segment according to Claim 3, **characterised in that** the at least one hole (8.1, 8.2, 8.3; 18.1; 38.1a, 38.2a) has an outer contour which substantially corresponds to the outer contour of the head (14.1a, 24.1a; 34.1a, 35.2a).

5. Friction-lining segment according to Claim 4, **characterised in that** the head (34.1a, 35.2a) is of rhombic design and **in that** the at least one hole (38.1a) has an elliptical outer contour.

6. Friction-lining segment according to one of the preceding claims, **characterised in that** the lock element (34.1) and/or the lock counter-element (35.2) have/has a groove (5.1, 5.2, 5.3; 15.2; 25.2; 34.1c, 35.2c) and **in that** the at least one hole (28.1a, 28.1b; 38.1b, 38.1c) is provided in the region (7.1, 7.2, 7.3; 17.1; 27.1; 37.1.) bordering the groove (5.1, 5.2, 5.3; 15.2; 25.2; 34.1c, 35.2c).

7. Friction-lining segment according to one of the preceding claims, **characterised in that** the depth of the at least one hole (8.1, 8.2, 8.3; 18.1; 28.1a, 28.1b; 38.1a, 38.1b, 38.1c, 38.2a) extends over the entire thickness of the friction lining (3, 13, 23, 33).

8. Friction lining (3, 13, 23, 33) of a friction plate for a brake, clutch or the like,
- with at least two friction-lining segments (3.1, 3.2, 3.3; 13.1, 13.2; 23.1, 23.2; 33.1, 33.2) adjoining each other at at least one end,
- the first friction-lining segment (3.1, 3.2, 3.3; 13.1, 13.2; 23.1, 23.2; 33.1, 33.2) having, at an end adjoining one end of the adjacent second friction-lining segment (3.1, 3.2, 3.3; 13.1, 13.2; 23.1, 23.2; 33.1, 33.2), a lock element (4.1, 4.2, 4.3; 14.1; 24.1; 34.1) and/or a lock counter-element (5.1, 5.2, 5.3; 15.2; 25.2; 35.2), which
- can be connected to a lock counter-element (5.1, 5.2, 5.3; 15.2; 25.2; 35.2) or, respectively, lock element (4.1, 4.2, 4.3; 14.1; 24.1; 34.1) arranged at the adjoining end of the adjacent second friction-lining segment (3.1, 3.2, 3.3; 13.1, 13.2; 23.1, 23.2; 33.1, 33.2), to form a lock (6.1, 6.2, 6.3; 16.1; 26.1; 36.1),
**characterised in that**
- at least one hole (8.1, 8.2, 8.3; 18.1; 28.1a, 28.1b; 38.1a, 38.1b, 38.1c, 38.2a) is provided in a region (7.1, 7.2, 7.3; 17.1; 27.1; 37.1) of the lock (6.1, 6.2, 6.3; 16.1; 26.1; 36.1), which hole allows the stress on the friction lining (3, 13, 23, 33) to be relieved at the respective adjoining edges of adjacent friction-lining segments (3.1, 3.2, 3.3; 13.1, 13.2; 23.1, 23.2; 33.1, 33.2) when subjected to load.

9. Friction lining according to Claim 8, **characterised in that**
- the lock element (34.1) has a tongue (4.1, 4.2, 4.3; 14.1; 24.1; 34.1a, 34.1b) with a neck (14.1b, 24.1b, 34.1b) and a head (14.1a, 24.1a, 34.1a) and **in that**
- the lock counter-element (35.2) has a groove (5.1, 5.2, 5.3; 15.2; 25.2; 34.1c, 35.2c) which accommodates the tongue (4.1, 4.2, 4.3; 14.1; 24.1; 34.1a, 34.1b) with the neck (14.1b, 24.1b, 34.1b) and the head (14.1a, 24.1a, 34.1a) substantially with a form fit and **in that**
- the head (14.1a, 24.1a, 34.1a) has the at least one hole (8.1, 8.2, 8.3; 18.1; 38.1a).

10. Friction lining according to Claim 9, **characterised in that** at least one further hole (28.1a, 28.1b; 38.1b, 38.1c) is provided in the region of the lock counter-element (35.2) bordering the groove (5.1, 5.2, 5.3; 15.2; 25.2; 34.1c, 35.2c).

11. Friction lining according to Claim 9 or 10,
**characterised in that**
- the lock counter-element (35.2) has a tongue with a neck (35.2b) and a head (35.2a) and **in that**
- the lock element (34.1) has a groove (34.1c) which accommodates the tongue with the neck (35.2b) and the head (35.2a) substantially with a form fit and **in that**
- the head (35.2a) has at least one further hole (38.2a).

12. Method for producing friction-lining segments (3.1, 3.2, 3.3; 13.1, 13.2; 23.1, 23.2; 33.1, 33.2) which have
- at least one lock element (4.1, 4.2, 4.3; 14.1; 24.1; 34.1) arranged at one end and/or
- at least one lock counter-element (5.1, 5.2, 5.3; 15.2; 25.2; 35.2) arranged at the other end and
- which are punched or cut out of a fibrous material,
**characterised in that**
- at least one hole (8.1, 8.2, 8.3; 18.1; 28.1a, 28.1b; 38.1a, 38.1b, 38.1c, 38.2a) is milled, punched or cut in a region (7.1, 7.2, 7.3; 17.1; 27.1; 37.1) of the lock element (4.1, 4.2, 4.3; 14.1; 24.1; 34.1) and/or
- in a region (7.1, 7.2, 7.3; 17.1; 27.1; 37.1) of the lock counter-element (5.1, 5.2, 5.3; 15.2; 25.2; 35.2), which hole allows the stress on the friction lining (3, 13, 23, 33) to be relieved at the respective adjoining edges of adjacent friction-lining segments (3.1, 3.2, 3.3; 13.1, 13.2; 23.1, 23.2; 33.1, 33.2) when subjected to load.

13. Method according to Claim 12,
**characterised in that** the lock elements (4.1, 4.2, 4.3; 14.1; 24.1; 34.1) and the lock counter-elements (5.1, 5.2, 5.3; 15.2; 25.2; 35.2) at the friction-lining-segment ends are punched or cut substantially perpendicular to a fibre direction.

14. Friction plate (1)
- with a carrier (2, 32), and
- with at least one friction lining (3, 13, 23, 33) in accordance with one of the Claims 8 to 11, arranged on at least one end face of the carrier (2, 32).

15. Method for producing a friction plate (1) according to Claim 14,
in which the friction-lining segments (3.1, 3.2, 3.3; 13.1, 13.2; 23.1, 23.2; 33.1, 33.2) of the friction lining (3, 13, 23, 33) are glued to the carrier (2, 32),
**characterised in that**
the friction plate (1) is impregnated with resin following the gluing.

## Revendications

1. Un segment de garniture de friction (3.1, 3.2, 3.3 ; 13.1, 13.2 ; 23.1, 23.2 ; 33.1, 33.2) pour une garniture de friction (3,13,23,33) segmentée d'un disque de friction (1) pour un frein, un embrayage ou analogue
- avec un élément de verrouillage (4.1, 4.2, 4.3 ; 14.1 ; 24.1 ; 34.1) disposé du côté d'une extrémité et/ou
- avec un élément de verrouillage conjugué (5.1, 5.2, 5.3 ; 15.2 ; 25.2 ; 35.2) disposé du côté de l'autre extrémité
**caractérisé en ce que**,
- dans une zone (7.1, 7.2, 7.3 ; 17.1 ; 27.1 ; 37.1) de l'élément de verrouillage (4.1, 4.2, 4.3 ; 14.1 ; 24.1 ; 34.1) et/ou
- dans une zone (7.1, 7.2, 7.3 ; 17.1 ; 27.1 ; 37.1) de l'élément de verrouillage conjugué (5.1, 5.2, 5.3 ; 15.2 ; 25.2 ; 35.2) est prévu au moins un trou (8.1, 8.2, 8.3 ; 18.1 ; 28.1a, 28.1b ; 38.1a, 38.1b, 38.1c, 38.2a) permettant sur les arêtes respectives, limitrophes les unes des autres, de segments de garniture de friction (3.1, 3.2, 3.3 ; 13.1, 13.2 ; 23.1, 23.2 ; 33.1, 33.2) voisins, un relâchement de la garniture de friction (3,13,23,33) en cas de sollicitation par une charge.

2. Segment de garniture de friction selon la revendication 1, **caractérisé en ce que** l'élément de verrouillage (34.1) et/ou l'élément de verrouillage conjugué (35.2) présentent une patte (4.1, 4.2, 4.3 ; 14.1 ; 24.1 ; 34.1a, 34.1b, 35.2a, 35.2b) dans laquelle est prévu le au moins un trou (8.1, 8.2, 8.3 ; 18.1 ; 38.1a, 38.2a).

3. Segment de garniture de friction selon la revendication 2, **caractérisé en ce que** la patte (4.1, 4.2, 4.3 ; 14.1 ; 24.1 ; 34.1a, 34.1b, 35.2a, 35.2b) présente un col (14.1b ; 24.1b ; 34.1b, 35.2b) et une tête (14.1a ; 24.1a ; 34.1a, 35.2a), et **en ce que** le au moins un trou (8.1, 8.2, 8.3 ; 18.1 ; 38.1a, 38.2a) se trouve dans la tête (14.1a ; 24.1a ; 34.1a, 35.2a).

4. Segment de garniture de friction selon la revendication 3, **caractérisé en ce que** le au moins un trou (8.1, 8.2, 8.3 ; 18.1 ; 38.1a, 38.2a) présente un contour extérieur correspondant sensiblement au contour extérieur de la tête (14.1a ; 24.1a ; 34.1a, 35.2a).

5. Segment de garniture de friction selon la revendication 4, **caractérisé en ce que** la tête (34.1a, 35.2a) est formée en losange, et **en ce que** le au moins un trou (38.1a) présente un contour extérieur elliptique.

6. Segment de garniture de friction selon l'une des revendications précédentes, **caractérisé en ce que** l'élément de verrouillage (34.1) et/ou l'élément de verrouillage conjugué (35.2) présente(nt) une rainure (5.1, 5.2, 5.3 ; 15.2 ; 25.2 ; 34.1c, 35.2c) et **en ce que** le au moins un trou (28.1a, 28.1b ; 38.1b, 38.1c) est prévu dans la zone (7.1, 7.2, 7.3 ; 17.1 ; 27.1 ; 37.1) limitrophe à la rainure (5.1, 5.2, 5.3 ; 15.2 ; 25.2 ; 34.1c, 35.2c).

7. Segment de garniture de friction selon l'une des revendications précédentes, **caractérisé en ce que** la profondeur du au moins un trou (8.1, 8.2, 8.3 ; 18.1 ; 28.1a, 28.1b ; 38.1b, 38.1c, 38.2a) s'étend sur toute l'épaisseur de la garniture de friction (3,13,23,33).

8. Garniture de friction (3,13,23,33) d'un disque de friction pour un frein, un embrayage ou analogues,
- avec au moins deux segments de garniture de friction (3.1, 3.2, 3.3 ; 13.1, 13.2 ; 23.1, 23.2 ; 33.1, 33.2) limitrophes l'un à l'autre, côté extrémité,
où
- le premier segment de garniture de friction (3.1, 3.2, 3.3 ; 13.1, 13.2 ; 23.1, 23.2 ; 33.1, 33.2) présente, sur une extrémité, limitrophe à une extrémité du deuxième segment de garniture de friction (3.1, 3.2, 3.3 ; 13.1, 13.2 ; 23.1, 23.2 ; 33.1, 33.2) voisin, un élément de verrouillage (4.1, 4.2, 4.3 ; 14.1 ; 24.1 ; 34.1) et/ou un élément de verrouillage conjugué (5.1, 5.2, 5.3 ; 15.2 ; 25.2 ; 35.2),
- susceptible d'être relié à un élément de verrouillage conjugué (5.1, 5.2, 5.3 ; 15.2 ; 25.2 ; 35.2) ou un élément de verrouillage (4.1, 4.2, 4.3 ; 14.1 ; 24.1 ; 34.1) disposé sur l'extrémité limitrophe du deuxième segment de garniture de friction (3.1, 3.2, 3.3 ; 13.1, 13.2 ; 23.1, 23.2 ; 33.1, 33.2) voisin, en formant un verrou (6,1. 6.2, 6.3 ; 16.1 ; 26.1 ; 36.1),
**caractérisé en ce que**
- dans une zone (7.1, 7.2, 7.3 ; 17.1 ; 27.1 ; 37.1) du verrou (6,1. 6.2, 6.3 ; 16.1 ; 26.1 ; 36.1) est prévu au moins un trou (8.1, 8.2, 8.3 ; 18.1 ; 28.1a, 28.1b ; 38.1a, 38.1b, 38.1c, 38.2a) permettant, sur les arêtes respectives, limitrophes les unes des autres, de segments de garniture de friction (3.1, 3.2, 3.3 ; 13.1, 13.2 ; 23.1, 23.2 ; 33.1, 33.2) voisins, un relâchement de la garniture de friction (3,13,23,33) en cas de sollicitation par une charge.

9. Garniture de friction selon la revendication 8, **caractérisé en ce que**
- l'élément de verrouillage (34.1) présente une patte (4.1, 4.2, 4.3 ; 14.1 ; 24.1 ; 34.1a, 34.1b) avec un col (14.1b, 24.1b,34.1b) et une tête (14.1a, 24.1a, 34.1a) et **en ce que**
- l'élément de verrouillage conjugué (35.2) présente une rainure (5.1, 5.2, 5.3 ; 15.2 ; 25.2 ; 34.1c ; 35.2c) recevant, sensiblement par une liaison à ajustement de forme, la patte (4.1, 4.2, 4.3 ; 14.1 ; 24.1 ; 34.1a, 34.1b) avec le col (14.1b, 24.1b,34.1b) et la tête (14.1a, 24.1a, 34.1a), et **en ce que** la tête (14.1a, 24.1a, 34.1a) présente le au moins un trou (8.1, 8.2, 8.3 ; 18.1 ; 38.1a)

10. Garniture de friction selon la revendication 9, **caractérisé en ce que**,
dans la zone, limitrophe à la rainure (5.1, 5.2, 5.3 ; 15.2 ; 25.2 ; 34.1c ; 35.2c), de l'élément de verrouillage conjugué (35.2) est prévu au moins un autre trou (28.1a, 28.1b ; 38.1b, 38.1c).

11. Garniture de friction selon la revendication 9 ou 10, **caractérisé en ce que**
- l'élément de verrouillage conjugué (35.2) présente une patte avec un col (35.2b) et une tête (35.2a), et **en ce que**
- l'élément de verrouillage (34.1) présente une rainure (34.1c) recevant, sensiblement par une liaison à ajustement de forme, la patte avec le col (35.2b) et la tête (35.2a), et **en ce que**
- la tête (35.2a) présente au moins un autre trou (38.2a).

12. Procédé de fabrication de segments de garniture de friction (3.1, 3.2, 3.3 ; 13.1, 13.2 ; 23.1, 23.2 ; 33.1, 33.2), présentant
- au moins un élément de verrouillage (4.1, 4.2, 4.3 ; 14.1 ; 24.1 ; 34.1) disposé du côté d'une extrémité, et/ou
- au moins un élément de verrouillage conjugué (5.1, 5.2, 5.3 ; 15.2 ; 25.2 ; 35.2) disposé du côté d'une autre extrémité, et
- ceci étant produit par estampage ou découpage à partir d'un matériau fibreux,
**caractérisé en ce que**
- dans une zone (7.1, 7.2, 7.3 ; 17.1 ; 27.1 ; 37.1) de l'élément de verrouillage (4.1, 4.2, 4.3 ; 14.1 ; 24.1 ; 34.1), et/ou
- dans une zone (7.1, 7.2, 7.3 ; 17.1 ; 27.1 ; 37.1) de l'élément de verrouillage conjugué (5.1, 5.2, 5.3 ; 15.2 ; 25.2 ; 35.2), est fraisé, estampé ou taillé, au moins un trou (8.1, 8.2, 8.3 ; 18.1 ; 28.1a, 28.1b ; 38.1a, 38.1b, 38.1c, 38.2a), permettant aux arêtes respectives, limitrophes les unes des autres, de segments de garniture de friction (3.1, 3.2, 3.3 ; 13.1, 13.2 ; 23.1, 23.2 ; 33.1, 33.2) voisins, un relâchement de la garniture de friction (3,13,23,33) en cas de sollicitation par une charge.

13. Procédé selon la revendication 12, **caractérisé en ce que** les éléments de verrouillage (4.1, 4.2, 4.3 ; 14.1 ; 24.1 ; 34.1) ou les éléments de verrouillage conjugué (5.1, 5.2, 5.3 ; 15.2 ; 25.2 ; 35.2) sont estampés ou coupés sensiblement perpendiculairement à une direction de fibre, au niveau des extrémités de segments de garniture de friction.

14. Disque de friction (1)
- comprenant un support (2,32), et
- avec au moins une garniture de friction (3,13,23,33) disposée sur au moins une face frontale du support (2,32), selon l'une des revendications 8 à 11.

15. Procédé de fabrication d'un disque de friction (1) selon la revendication (14),
dans lequel les segments de garniture de friction (3.1, 3.2, 3.3 ; 13.1, 13.2 ; 23.1, 23.2 ; 33.1, 33.2) de la garniture de friction (3,13,23,33) sont collés au support (2,32),
**caractérisé en ce que** le disque de friction (1) est imbibé dans la résine après l'opération de collage.
